# EUROPÄISCHE PATENTANMELDUNG

(11) **EP 3 196 659 A1**
(43) Veröffentlichungstag der Anmeldung: **26.07.2017**
(21) Anmeldenummer: 16151942.6
(22) Anmeldetag: 19.01.2016
(51) Int. Cl.: G01P 5/12, G01F 1/69

(54) **STRÖMUNGSSENSOR UND VERFAHREN ZU SEINER HERSTELLUNG**

(71) Anmelder: Siemens Aktiengesellschaft, 80333 München (DE)
(72) Erfinder: HEFFELS, Camiel, 76297 Stutensee-Büchig (DE); KLEHR, Stefan, 76764 Rheinzabern (DE); VON DOSKY, Stefan, 76149 Karlsruhe (DE)

(57) **Zusammenfassung**

Strömungssensor (3) mit einem aus einem nichtmetallischen Material bestehenden Thermistor in Form einer dünnen Lochgitterplatte (4), die quer zu der zu messenden Strömung (2) angeordnet ist und in ihrem Randbereich (5) an zwei gegenüberliegenden Stellen Elektroden (6, 7) aufweist.

## Beschreibung

Die Erfindung betrifft einen Strömungssensor und ein Verfahren zu seiner Herstellung.

Bei der thermischen Anemometrie wird ein Strömungssensor mit einem Sensorelement verwendet, das elektrisch beheizt wird und dessen elektrischer Widerstand von der Temperatur abhängt. Bei Umströmung mit einem Fluid findet ein Wärmetransport in das Fluid statt, der sich mit der Strömungsgeschwindigkeit verändert. Durch Messung der elektrischen Größen des Sensorelements können die Strömung detektiert und ihre Geschwindigkeit oder der Massenstrom des Fluids gemessen werden.

Als Sensorelemente kommen variable elektrische Widerstände in Betracht, deren Widerstandswert sich mit der Temperatur reproduzierbar ändert. Solche Widerstände werden als Thermistoren bezeichnet, wobei zwischen Thermistoren mit positivem Temperaturkoeffizient (PTC, Kaltleiter) und Thermistoren mit negativem Temperaturkoeffizient (NTC, Heißleiter) unterschieden wird. Zu den Kaltleitern zählen insbesondere Metalle, wobei vorzugsweise Platin und Nickel verwendet werden, und als nichtmetallische Materialien polykristalline Keramiken, z. B. auf der Basis von Bariumtitanat, und dotierte Halbleiter, z. B. Silizium, mit Störstellenerschöpfung. Zu den Heißleitern zählen insbesondere reine oder dotierte Halbleiter außerhalb des Bereichs der Störstellenerschöpfung sowie polykristalline Halbleiter aus Metalloxiden.

Aus der DE 43 41 492 A1 ist eine Anordnung mit zwei NTC-Widerständen bekannt, die in einer gasführenden Leitung in Strömungsrichtung unmittelbar hintereinander angeordnet und jeweils mit einem gegen das strömende Medium inerten Kunststoff ummantelt sind.

Ein aus der DE 32 04 425 A1 bekannter Mikroströmungsfühler für Gasanalysengeräte weist ebenfalls zwei Strömungssensoren auf, die in Strömungsrichtung des zu messenden Gases unmittelbar hintereinander angeordnet sind. Die Strömungssensoren bestehen jeweils aus zwei elektrisch aufheizbaren mäanderförmigen Metallgittern, die zusammen mit zwei Ergänzungswiderständen eine Wheatstonebrücke bilden. Die Metallgitter sind innerhalb eines Plattenverbunds auf beiden Seiten einer isolierenden Abstandsplatte aufgebracht, die mit Deckplatten abgedeckt ist. Die Platten enthalten Fenster für das durchströmende Gas, über die sich die Metallgitter erstrecken.

Bei einem ähnlichen, aus der WO 2009/153099 A1 bekannten Mikroströmungsfühler bestehen die ebenfalls mäanderförmigen Gitter aus Silizium und werden in einem Siliziumsubstrat in einem Trockenätzprozess oder durch nasschemisches Ätzen gefertigt. Das mäanderförmige Gitter benötigt eine Stützstruktur.

Aus der DE 28 09 449 A1 ist ein scheibenförmiges Heizelement aus einem keramischem Halbleitermaterial, z. B. Bariumtitanat, mit positivem Temperaturkoeffizient bekannt. Das Heizelement enthält eine Vielzahl von Wabenöffnungen mit jeweils quadratischem Querschnitt, durch die ein aufzuheizendes Medium fließt. An den gegenüberliegenden Stirnseiten des Körpers sind Elektroden angebracht, über die dem Heizelement ein elektrischer Strom zugeführt wird.

Die DE 29 05 905 A1 offenbart mehrere solcher wabenförmiger Heizelemente, die in Strömungsrichtung des aufzuheizenden Mediums hintereinander angeordnet sind. Auch hier sind die Elektroden zum Anschluss einer Stromquelle an den Stirnflächen der Keramikkörper ausgebildet.

Aus der DE 36 37 541 A1 ist schließlich eine Vorrichtung zur Bestimmung der Durchflussrichtung des Luftstromes im Ansaugsystem eines Verbrennungsmotors bekannt, bei der im Luftmassenstrom temperaturabhängige Widerstandselemente angeordnet sind, welche elektrisch beheizbar und in unterschiedlichen Zweigen einer elektrischen Messbrücke angeordnet sind. Zur Vermeidung des Einflusses von Turbulenzen sind beiderseits der Vorrichtung sogenannte Strömungsgleichrichter angeordnet, bei denen es sich um wabenförmige Körper mit zahlreichen parallelen Strömungskanälen handelt. Dadurch wird sichergestellt, dass die eigentliche Messvorrichtung stets laminar angeströmt wird.

Nach dem gegenwärtigen Stand der Technik werden bei Mikroströmungsfühlern, wie sie in der Gasanalytik eingesetzt werden, als Sensorelemente Metallfäden oder mäanderförmige Metallgitter, hauptsächlich aus Platin oder Nickel bzw. entsprechende Legierungen verwendet. Nur solche feinen Strukturen weisen eine ausreichend geringe Wärmekapazität auf und ermöglichen die geforderte Messempfindlichkeit. Von Nachteil ist, dass Gase an den heißen Metallen dissoziieren können oder dass z. B. Kohlenmonoxid durch die Bildung von Carbonylen auf nickelhaltige Legierungen korrodierend einwirkt. Ein weiterer Nachteil ist die mechanische Empfindlichkeit von freihängenden und bei Aufheizung durchhängenden Metallfäden, was zum einen die Lebensdauer und zum anderen bei Vibrationen die Messgenauigkeit beeinträchtigt. Da außerdem der Wärmeübergangskoeffizient des Strömungsfühlers von seiner Geometrie abhängig ist, führt eine Änderung der Lage oder Geometrie des Gitters (z. B. Durchhängen) zu einem veränderten Übersprechverhalten zunächst auf das Gas und weiter auf das benachbarte zweite Gitter. Dieser Effekt ist direkt proportional zu dem Messwert und trägt zu einer Messwertdrift bei. Schließlich ist die für die Messempfindlichkeit wichtige temperaturabhängige Widerstandsänderung bei Metallen schlechter als bei anderen nichtmetallischen Materialien. Nicht zuletzt ist Platin vergleichsweise teuer.

Der Erfindung liegt daher die Aufgabe zugrunde, einen thermischen Strömungssensor aus nichtmetallischem Material anzugeben, der sich durch eine hohe Messempfindlichkeit und mechanische Stabilität auszeichnet und einfach und kostengünstig herstellbar ist.

Gemäß der Erfindung wird die Aufgabe durch den in Anspruch 1 angegebenen Strömungssensor gelöst.

Vorteilhafte Weiterbildungen des erfindungsgemäßen Strömungssensors sowie ein Verfahren zu seiner Herstellung sind den Unteransprüchen zu entnehmen.

Gegenstand der Erfindung ist somit ein Strömungssensor mit einem aus einem nichtmetallischen Material bestehenden Thermistor in Form einer dünnen Lochgitterplatte, die quer zu der zu messenden Strömung angeordnet ist und in ihrem Randbereich an zwei gegenüberliegenden Stellen Elektroden aufweist.

Unter dem Begriff Lochgitterplatte ist hier allgemein eine Rechteck-, Dreieck-, Sechseck- oder sonstige Gitterfolie oder eine großgelochte Folie zu verstehen. Die Lochgitterstruktur gibt der Platte bzw. Folie die erforderliche mechanische Stabilität, um die Löcher ausreichend groß, die Abstände der Löcher zueinander bzw. die Breite der Materialstege zwischen den Löchern möglichst klein und die Dicke der Platte bzw. Folie möglichst gering ausbilden zu können, so dass die Strömung den Strömungssensor weitgehend ungehindert passieren kann, die Wärmekapazität und damit die Ansprechträgheit des Strömungssensor möglichst gering ist und dennoch der Strömungssensor ausreichend stabil ist, um nicht von der Strömung ausgelenkt zu werden oder bei Vibrationsbelastung in Schwingung zu geraten. Aufgrund der steiferen Struktur ist die Lochgitterplatte im Vergleich zu den bekannten mäanderförmigen Gitterstrukturen weniger empfindlich gegenüber einem Durchhängen der heißen Leiter, wodurch die Messwertdrift verringert wird. Gleichzeitig erhöht sich die mechanische Eigenfrequenz, was wiederum die Vibrationsempfindlichkeit des Strömungssensors im niederfrequenten Bereich vermindert.

Da die Elektroden an gegenüberliegenden Stellen im Randbereich der Lochgitterplatte angeordnet sind, fließt der elektrische Strom in der Ebene der dünnen Lochgitterplatte durch die Materialstege zwischen den Löchern. Dabei ist der elektrische Widerstand von dem spezifischen Widerstand des Materials der Lochgitterplatte, der Dicke der Stege und der für den Strom effektiven Weglänge zwischen den Elektroden abhängig. Diese effektive Weglänge kann gegenüber dem Abstand der Elektroden dadurch verlängert werden, dass die Löcher in der Lochgitterplatte entlang der Verbindungsstrecke zwischen den beiden Elektroden in Richtung quer zu der Verbindungsstrecke gegeneinander versetzt angeordnet sind. Damit diese verlängerte Weglänge auch im Randbereich der Lochgitterplatte wirksam ist, kann diese dort angeschnittene Löcher aufweisen.

Durch Variation der Anzahl, Größe und/oder Form der Löcher lässt sich auf einfache Weise eine gewünschte, insbesondere auch eine gleichmäßige Temperaturverteilung über die gesamte Lochgitterplatte erreichen. Damit kann berücksichtigt werden, dass z. B. bei querschnittsfüllender Anordnung der Lochgitterplatte in einem Strömungskanal im Randbereich der Lochgitterplatte ein vergleichsweise größerer Wärmeabfluss in Richtung zu der Kanalwand stattfinden kann. Auf diese Weise kann auch die für den Strom effektive Weglänge zwischen den Elektroden im Randbereich der Lochgitterplatte eingestellt werden, was z. B. dann erforderlich sein kann, wenn der Querschnitt der Lochplatte von einer Rechteckform abweicht oder die Elektroden zueinander nicht parallel sind.

Grundsätzlich kommen alle möglichen Formen von Löchern (rund, polygonal) in Betracht, mit denen sich Kriterien wie mechanische Stabilität, geringer Strömungswiderstand, gewünschter elektrischer Widerstand und einfache Herstellbarkeit erfüllen lassen. Dabei sind regelmäßige Sechseck-Löcher besonders vorteilhaft, weil die resultierende hexagonale Struktur der Lochgitterplatte ein optimales, nämlich minimales Verhältnis von Materialvolumen zu Lochvolumen bei hoher mechanischer Stabilität ergibt.

Zur Erfassung von Wechselströmungen, insbesondere in Geräten der Gasanalytik, beispielsweise als Bestandteil eine optopneumatischen Detektors, ist der erfindungsgemäße Strömungssensor vorzugsweise zusammen mit mindestens einem stromaufwärts oder stromabwärts angeordneten baugleichen weiteren Strömungssensor in der Strömung angeordnet. Bei periodisch wechselnder Strömung findet ein Übersprechen in Form eines periodisch wechselnden Wärmeaustauschs zwischen beiden Strömungssensoren statt. Dies kann in an sich bekannter Weise mittels einer elektrischen Messbrücke gemessen werden, in der die Strömungssensoren in unterschiedlichen Brückenzweigen angeordnet sind. Um eine hohe Messempfindlichkeit zu erreichen, sind beide Strömungssensoren in einem möglichst geringen Abstand zueinander angeordnet, wozu sie vorzugsweise unter Zwischenlage einer ein Strömungsfenster enthaltenden Abstandsplatte in einem Plattenverbund angeordnet sind.

Neben der Verwendung als Mikroströmungsfühler in einem Gasanalysator kann der erfindungsgemäße Strömungssensor in vorteilhafter Weise als Luftmassensensor in einer Verbrennungsmaschine oder als medizinischer Atemstromsensor in einem Anästhesie- oder Beatmungsgerät angeordnet sein.

Die Löcher in der Lochgitterplatte können durch Materialabtrag in einer aus dem nichtmetallischen Material bestehenden Platte erzeugt werden. So können sie auf einfache Weise durch Laserbohren oder Laserschneiden in üblicherweise für Kaltleiter und Heißleiter verwendete Keramikscheiben eingebracht werden. Bei Verwendung von Halbleitermaterialien, wie z. B. Silizium, können die Löcher insbesondere auch durch Ätzen erzeugt werden. Alternativ kann die Lochgitterplatte durch Materialauftrag, vorzugsweise epitaktisch oder durch 3D-Druck erzeugt werden, wobei bei sinterfähigen Keramiken insbesondere Lasersintern in Betracht kommt. Dabei wird die Lochgitterplatte aus dem Keramikpulver Schicht für Schicht aufgebaut. Zur weiteren Erläuterung der Erfindung wird im Folgenden auf die Figuren der Zeichnung Bezug genommen; im Einzelnen zeigen:
- FIG. 1: ein schematisches Ausführungsbeispiel des erfindungsgemäßen Strömungssensors mit Lochgitterplatte zur Messung einer Strömung,
- FIG. 2: ein weiteres Ausführungsbeispiel mit zwei in der Strömung hintereinander angeordneten Strömungssensoren,
- FIG. 3: ein Beispiel für eine Anordnung der Strömungssensoren in einer elektrischen Messbrücke,
- FIG. 4: ein Ausführungsbeispiel des erfindungsgemäßen Strömungssensors in Draufsicht,
- FIG. 5: ein Beispiel für eine Anordnung der Strömungssensoren in einem Plattenverbund und die
- FIG. 6 bis 8: unterschiedliche Beispiele für die Löcher in der Lochgitterplatte.

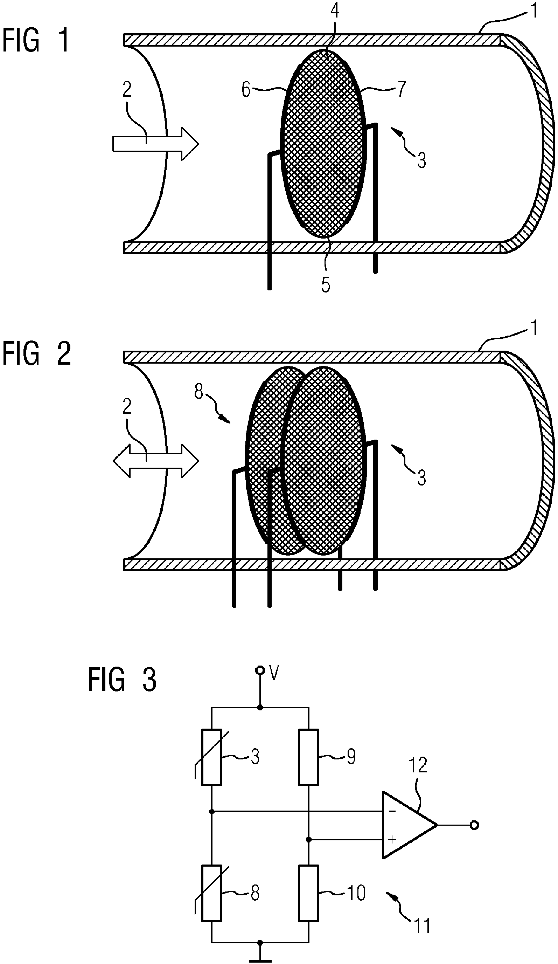

FIG. 1 zeigt in schematischer Darstellung einen Strömungskanal 1, durch den ein Gas mit einer zu messenden Strömung 2 fließt. In dem Strömungskanal 1 ist ein Strömungssensor 3 angeordnet. Dieser weist einen aus einem nichtmetallischen Material bestehenden Thermistor in Form einer dünnen Lochgitterplatte 4 auf, die quer zu der zu messenden Strömung 2 ausgerichtet ist und in ihrem Randbereich 5 an zwei einander gegenüberliegenden Stellen Elektroden 6, 7 zur Stromzuführung aufweist. Die Lochgitterplatte 4 füllt zumindest einen großen Teil des Querschnitts des Strömungskanals aus.

Der elektrische Strom fließt von der einen Elektrode, z. B. 6, über die zwischen den Löchern der Lochgitterplatte 4 befindlichen dünnen Materialstege zu der anderen Elektrode 7.

Dabei wird die Lochgitterplatte 4 über ihre Fläche erwärmt. Bei vorhandener Strömung 2 findet ein Wärmetransport in das Gas statt, der sich mit der Strömungsgeschwindigkeit ändert. Die Strömung wird durch Messen der elektrischen Größen des Strömungssensors 3 detektiert und ihre Geschwindigkeit oder der Massenstrom des Gases gemessen.

FIG. 2 zeigt denselben Strömungskanal 1 mit dem Strömungssensor 3 und einem weiteren baugleichen Strömungssensor 8, der in geringem Abstand zu dem Strömungssensor 3 vor oder hinter diesem angeordnet ist. Bei vorhandener Strömung 2 findet, je nach Richtung, ein Wärmetransport von dem einen Strömungssensor, z. B. 8, über das durchströmende Gas auf den anderen Strömungssensor 3 statt. So werden bei dem gegebenen Beispiel beide Strömungssensoren 3, 8 jeweils von dem durchfließenden Gas abgekühlt, wobei aber die Abkühlung des nachgeordneten Strömungssensors 3 aufgrund der höheren Temperatur des anströmenden Gases geringer ist.

FIG. 3 zeigt ein vereinfachtes Beispiel für die Anordnung der beiden Strömungssensoren 3, 8 zusammen mit Referenzwiderständen 9, 10 in unterschiedlichen Zweigen einer elektrischen Messbrücke 11. Die Messbrücke 11 wird an der Eingangsdiagonalen mit einer Spannung V oder einem Strom I versorgt, während eine Messspannung an der Ausgangsdiagonalen von einem Differenzverstärker 12 verstärkt wird. Die Messspannung ist ein Maß für die Verstimmung der Messbrücke 11 aufgrund der unterschiedlich erwärmten Strömungssensoren 3, 8.

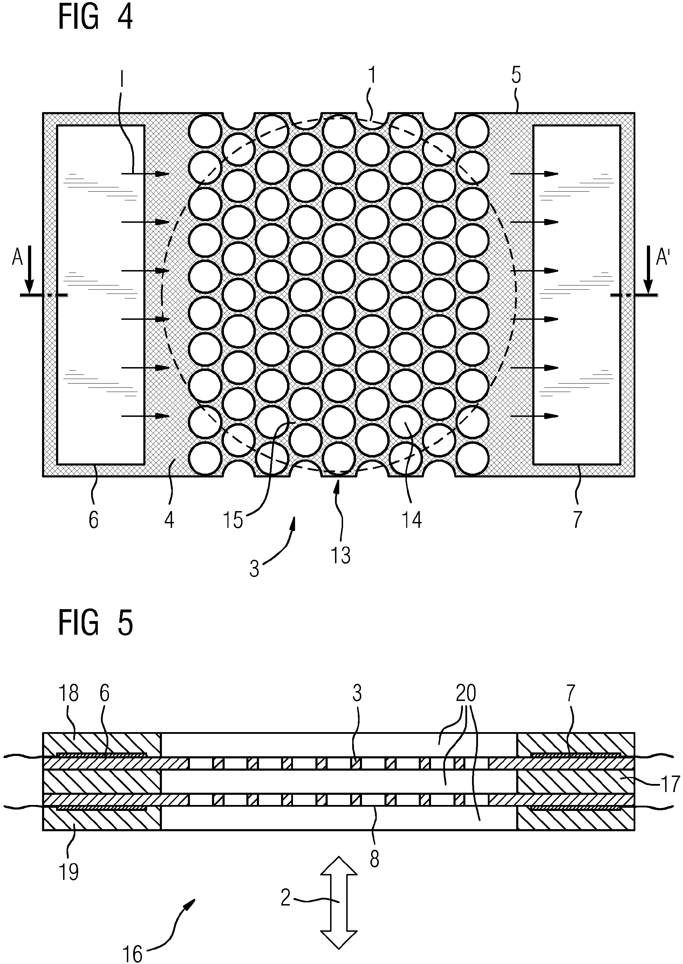

FIG. 4 zeigt ein Ausführungsbeispiel des erfindungsgemäßen Strömungssensors 3 in Draufsicht. Dieser besteht aus der Lochgitterplatte 4, die hier als Rechteckfolie mit einem Lochgitter 13 im mittleren Bereich ist und den hier parallelen Elektroden 6, 7 beiderseits des Lochgitters 13 und entlang den schmalen Seiten des Rechtecks ausgebildet ist. Der mittlere Bereich des Lochgitters 13 befindet sich im Querschnittsbereich des Strömungskanals 1. Anstelle des hier gezeigten Kreisquerschnitts kann der Strömungskanal 1 insbesondere auch einen Rechteckquerschnitt aufweisen. Das Lochgitter 13 enthält eine Vielzahl vom Rundlöchern 14, die entlang der kürzesten Verbindungsstrecke zwischen den beiden Elektroden 6, 7 in Richtung quer zu dieser Verbindungsstrecke abwechselnd versetzt angeordnet sind. Die Pfade für den Strom I über die Materialstege 15 zwischen den Löchern 14 verlaufen daher nicht gerade auf kürzestem Wege von der Elektrode 6 zur Elektrode 7 sondern zickzackförmig, wodurch die effektive Weglänge und damit der elektrische Widerstand für den Strom I verlängert ist. Im Vergleich dazu kann bei Verwendung eines sehr hochohmigen Materials für den Thermistor die Weglänge für den Strom I verkürzt werden, indem das gezeigte Lochgitter 13 um 90° gedreht wird.

FIG. 5 zeigt den Strömungssensor 3 aus FIG. 4 in einem Schnitt entlang der Linie AA' und zusammen mit dem weiteren baugleichen Strömungssensor 8. Die Strömungssensoren 3, 8 sind innerhalb eines Plattenverbunds 16 auf beiden Seiten einer isolierenden Abstandsplatte 17 angeordnet und sind jeweils mit Deckplatten 18, 19 abgedeckt. Die Platten 17, 18, 19 enthalten jeweils mit dem Strömungskanal 1 Fenster 20 für das durchströmende Gas, die mit dem Strömungskanal 1 fluchten. Bei Ausbildung der Sensoranordnung als Mikroströmungsfühler sind die einzelnen Fenster 20 zum Beispiel etwa 1 mm² groß und die Lochgitter der Strömungssensoren 3, 8 wenige µm dick. Bei den Lochgittern beträgt das Volumenverhältnis der Löcher zu den Materialstegen beispielsweise etwa 2:1.

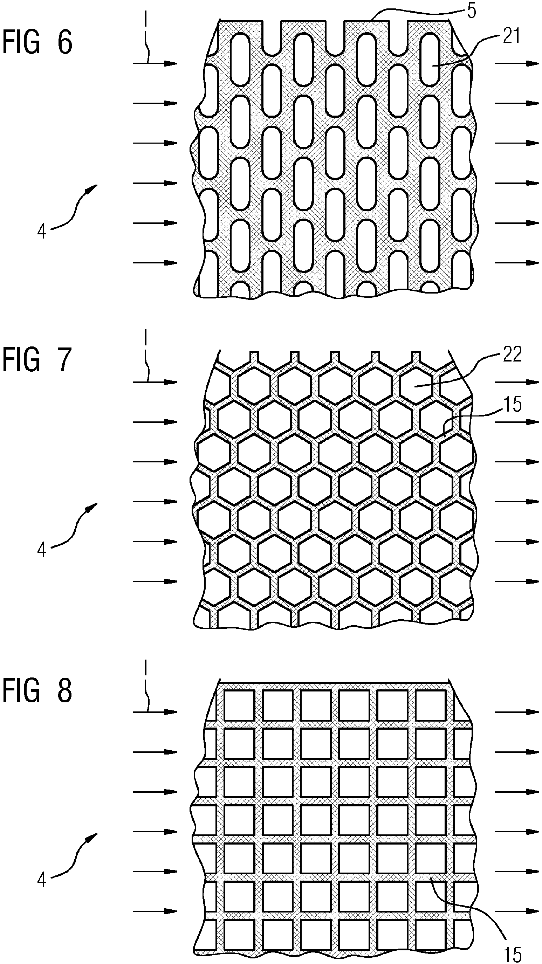

FIG. 6 zeigt beispielhaft einen Ausschnitt aus der Lochgitterplatte 4, die hier quer zur Richtung des Stroms I abwechselnd versetzte Langlöcher 21 enthält. Je länger die Löcher 21 sind umso größer ist die oben erläuterte Verlängerung der effektiven Wegstrecke für den Strom I. Im Randbereich 5 der Lochgitterplatte 4 sind die Löcher 21 angeschnitten, so dass auch hier die verlängerte Weglänge zum Tragen kommt.

FIG. 7 zeigt beispielhaft einen Ausschnitt aus der Lochgitterplatte 4, mit regelmäßigen Sechseck-Löchern 22, so dass das Lochgitter 13 eine hexagonale Struktur aufweist. Diese Struktur zeichnet sich durch eine hohe mechanische Stabilität und ein hohes Durchlassvermögen für die zu messende Strömung aus.

FIG. 8 zeigt schließlich ein Beispiel für eine Lochgitterplatte 4 mit quadratischer Gitterstruktur. Die Pfade für den Strom I sind hier allein durch die gerade auf kürzestem Wege zwischen den Elektroden verlaufenden Materialstege 15 definiert. Zur Verlängerung der effektiven Wegstrecke für den Strom I kann das das Lochgitter 13 um 45° gedreht werden.

In FIG. 7 und 8 haben die jeweils senkrecht zu dem kürzesten Verbindungsweg zwischen den Elektroden verlaufenden Materialstege 15 keine elektrische Funktion, weil aufgrund der Symmetrie des Lochgitters 13 durch sie kein Strom fließt. Diese Materialstege 15 tragen daher nur zur Stabilität der Lochgitterplatte 4 bei und können daher in vorteilhafter Weise ausschließlich unter diesem Gesichtspunkt dimensioniert werden.

## Patentansprüche

1. Strömungssensor (3) mit einem aus einem nichtmetallischen Material bestehenden Thermistor in Form einer dünnen Lochgitterplatte (4), die quer zu der zu messenden Strömung (2) angeordnet ist und in ihrem Randbereich (5) an zwei gegenüberliegenden Stellen Elektroden (6, 7) aufweist.

2. Strömungssensor (3) nach Anspruch 1, **dadurch gekennzeichnet, dass** die Löcher (14, 21) in der Lochgitterplatte (4) entlang einer Verbindungsstrecke zwischen den beiden Elektroden (6, 7) in Richtung quer zu der Verbindungsstrecke gegeneinander versetzt angeordnet sind.

3. Strömungssensor (3) nach Anspruch 1 oder 2, **dadurch gekennzeichnet, dass** die Lochgitterplatte (4) in ihrem Randbereich (5) zwischen den Elektroden (6, 7) angeschnittene Löcher (21) aufweist.

4. Strömungssensor (3) nach einem der vorangehenden Ansprüche, **dadurch gekennzeichnet, dass** die Löcher als regelmäßige Sechseck-Löcher (22) ausgebildet sind.

5. Strömungssensor (3) nach einem der vorangehenden Ansprüche, **dadurch gekennzeichnet, dass** die Lochgitterplatte (4) als Rechteckplatte mit einem Lochgitter (13) im mittleren Bereich ausgebildet ist und die Elektroden (6, 7) beiderseits des Lochgitters (13) auf der Rechteckplatte und entlang den schmalen Seiten des Rechtecks ausgebildet sind.

6. Strömungssensor (3) nach einem der vorangehenden Ansprüche, **dadurch gekennzeichnet, dass** er zusammen mit mindestens einem stromaufwärts oder stromabwärts angeordneten baugleichen weiteren Strömungssensor (8) in der Strömung (2) angeordnet ist.

7. Strömungssensor (3) nach Anspruch 6, **dadurch gekennzeichnet, dass** er zusammen mit dem mindestens einen weiteren Strömungssensor (8) in unterschiedlichen Zweigen einer elektrischen Messbrücke (11) angeordnet ist.

8. Strömungssensor (3) nach Anspruch 6 oder 7, **dadurch gekennzeichnet, dass** er zusammen mit dem mindestens einen weiteren Strömungssensor (8) unter Zwischenlage einer ein Strömungsfenster (20) enthaltenden Abstandsplatte (17) in einem Plattenverbund (16) angeordnet ist.

9. Strömungssensor (3) nach einem der vorangehenden Ansprüche, **dadurch gekennzeichnet, dass** er als Mikroströmungsfühler in einem Gasanalysator angeordnet ist.

10. Strömungssensor (3) nach einem der Ansprüche 1 bis 8, **dadurch gekennzeichnet, dass** er als Luftmassensensor in einer Verbrennungsmaschine angeordnet ist.

11. Strömungssensor (3) nach einem der Ansprüche 1 bis 8, **dadurch gekennzeichnet, dass** er als medizinischer Atemstromsensor in einem Anästhesie- oder Beatmungsgerät angeordnet ist.

12. Verfahren zur Herstellung des Strömungssensors (3) nach einem der vorangehenden Ansprüche, **dadurch gekennzeichnet, dass** die Löcher (14, 21, 22) durch Materialabtrag in einer aus dem nichtmetallischen Material bestehenden Platte erzeugt werden.

13. Verfahren nach Anspruch 12, **dadurch gekennzeichnet, dass** die Löcher (14, 21, 22) durch Ätzen, Laserbohren oder Laserschneiden erzeugt werden.

14. Verfahren zur Herstellung des Strömungssensors (3) nach einem der Ansprüche 1 bis 11, **dadurch gekennzeichnet, dass** die Lochgitterplatte (4) durch Materialauftrag erzeugt wird.

15. Verfahren nach Anspruch 14, **dadurch gekennzeichnet, dass** die Lochgitterplatte (4) epitaktisch oder durch 3D-Druck erzeugt wird.

16. Verfahren nach Anspruch 14, **dadurch gekennzeichnet, dass** die Lochgitterplatte (4) durch Lasersintern erzeugt wird.
